# EUROPÄISCHE PATENTSCHRIFT

(11) **EP 0 555 534 B1**
(45) Veröffentlichungstag und Bekanntmachung des Hinweises auf die Patenterteilung: **17.05.1995**
(21) Anmeldenummer: 92119869.3
(22) Anmeldetag: 21.11.1992
(51) Int. Cl.: G04G 7/02, G04C 11/02, G04G 15/00

(54) **Einrichtung zum Empfangen von mittels Funk übertragener, codierter Zeitsignale**
Receiving means for coded time signals transmitted by radio
Dispositif pour la réception de signaux de temps codés, transmis par radio

(30) Priorität: 12.02.1992 DE 9201770 U
(43) Veröffentlichungstag der Anmeldung: 18.08.1993
(73) Patentinhaber: BUDERUS HEIZTECHNIK GmbH, D-35522 Wetzlar (DE)
(72) Erfinder: Jakob, Rainer, Dipl.-Ing., W-6301 Heuchelheim (DE)

(56) Entgegenhaltungen:
- EP-A- 0 424 772
- DE-U- 9 112 730
- DATABASE WPI Week 8533, Derwent Publications Ltd., London, GB; AN 85-201584 ANONYMOUS 'Heating controller with radio control - of clocks using controllers receiving standard long wave timing signals'

## Beschreibung

Die Erfindung betrifft eine Einrichtung nach dem Oberbegriff des Patenanspruches.

Das Funktionsprinzip der Übertragung codierter Zeitsignale mittels Funk, d.h. die sogenannte Funkuhr, ist allgemein bekannt. Von einem Sender wird über Funk die aktuelle Uhrzeit den mit einem Empfänger für die Signale versehenen Uhren übermittelt. Die Uhren sind dadurch immer richtig eingestellt. Zeitveränderungen, etwa Veränderungen zwischen Sommer- und Winterzeit, sind ohne Eingriff an den einzelnen Uhren einzustellen.

Das bekannte Prinzip kann ohne weiteres auch bei Schaltuhren von Kesselreglern angewandt werden. Gerade bei diesen Schaltuhren ist eine genaue Zeitangabe notwendig, da die gewünschten Betriebszustände hinsichtlich des Heiz- und Brauchwasserbetriebes zeitabhängig von der Regelung eingestellt werden. Für die Anwendung des Prinzips ist der Schaltuhr ein spezieller Signalempfänger zuzuordnen. Dieser handelsübliche Empfänger kann über eine geeignete Interfaceschaltung die Schaltuhr steuern. Da ein Zentralheizungskessel in der Regel im Heizungskeller, d.h. in einer sehr empfangsungünstigen Lage, angeordnet ist, ist es erforderlich, den Empfänger oder zumindest die Antenne an einen Ort zu montieren, der den Empfang der Signale gewährleistet. Von hier werden dann die Impulse an die Schaltuhr weitergeleitet. Die Anordnung des Empfängers bzw. der Antenne entfernt vom Heizkessel bedeutet einen beträchtlichen Verkabelungs- und Montageaufwand.

Die EP 0 424 772 A2 beschreibt eine solche Anordnung des Empfängers an einer empfangsgünstigen Stelle eines Gebäudes, etwa unter dem Dachstuhl, mit einer separaten Übermittlungsstrecke zur Schaltuhr des Kesselreglers. Dabei besitzt ein Umsetzer-Empfänger eine Antenne für den Empfang der Signale und den eigentlichen Empfänger. Über die Übermittlungsstrecke in Form des Stromversorgungsnetzes oder einer weiteren Funkstrecke gelangen die Signale zu einer Auswertestation. Sie werden dort in einer Auswerteschaltung umgesetzt und einer Zeitanzeige übermittelt. Es handelt sich hierbei um die beschriebene Anordnung eines Empfängers entfernt von dem Heizkessel bzw. von dessen Auswertestation mit einer separaten Übermittlungsstrecke. Da diese nicht vom Heizungsbauer installiert wird, entsteht ein besonderer Aufwand hinsichtlich Planung und Montage.

Auch der EP 0 062 218 A2 ist eine solche Einrichtung zu entnehmen, bei der die empfangenen Signale über das gebäudeinterne Stromversorgungsnetz an die Schaltuhr weitergeleitet werden. Hier sind entsprechende Planungen und Einzelarbeiten erforderlich, die vom Elektroinstallateur durchzuführen sind. Der Heizungsbauer ist bei seinen Arbeiten von den Vorarbeiten des Elektoistallateurs abhängig. Nur dort, wo dieser entsprechende Anschlußmöglichkeiten geschaffen hat, ist die Anordnung des Empfängers möglich. Ein nachträglicher Einbau des Empfängers ohne direkten Zugriff zum Stromversorgungsnetz ist nicht möglich.

Die DE-U-91 12 730 offenbart schließlich die Anordnung des Funkuhrempfängers im oder am Gehäuse des Außentemperaturfühlers. Der Außentemperaturfühler stellt ein separates Funktionsteil dar, das nicht vom Heizungshersteller gefertigt und vertrieben wird. Die Integration des Empfängers in dessen Gehäuse ist mit einigen Problemen für den Heizungsbauer verbunden. Die Funktionsfähigkeit des Teiles ist nicht in allen Fällen gewährleistet.

Der Erfindung lag die Aufgabe zugrunde, auch bei einem an empfangsungünstiger Stelle angeordneten Heizkessel ein sicheres Empfangen der Signale des Senders zu gewährleisten und dennoch auf separate Verkabelungen von einem entfernt sitzenden Empfänger zur Schaltuhr zu verzichten.

Die erfindungsgemäße Einrichtung besitzt die im Kennzeichen des Patentanspruches 1 genannten Merkmale.

Anstelle des bekannten Empfangsgerätes, das eine Verdrahtung von der empfangsgünstigen Stelle zum empfangsungünstig angeordneten Heizkessel erforderlich macht, ist der Empfänger im Fernbedienungsgerät des Reglers angeordnet. Dieses Fernbedienungsgerät sitzt im Wohnraum, also an einer empfangsgünstigen Stelle. Von ihm werden die notwendigen Anweisungen über eine installlierte Leitung dem Regler übermittelt. Somit wird die vorhandene Einrichtung, nämlich das Gehäuse der Fernbedienung und die schon installierte Zuleitung, für das Empfangen der Signale und deren Weiterleitung an die Schaltuhr benutzt. Es ist lediglich nötig, einen Empfänger in Form einer Antenne und einer Auswertelektronik in der Fernbedienung anzuordnen. Auf ein eigenständiges Empfangsgerät wird hingegen verzichtet. Es werden nicht nur die Kosten für dieses Gerät, sondern auch die Kosten und der Aufwand für eine eigene Leitung vermieden.

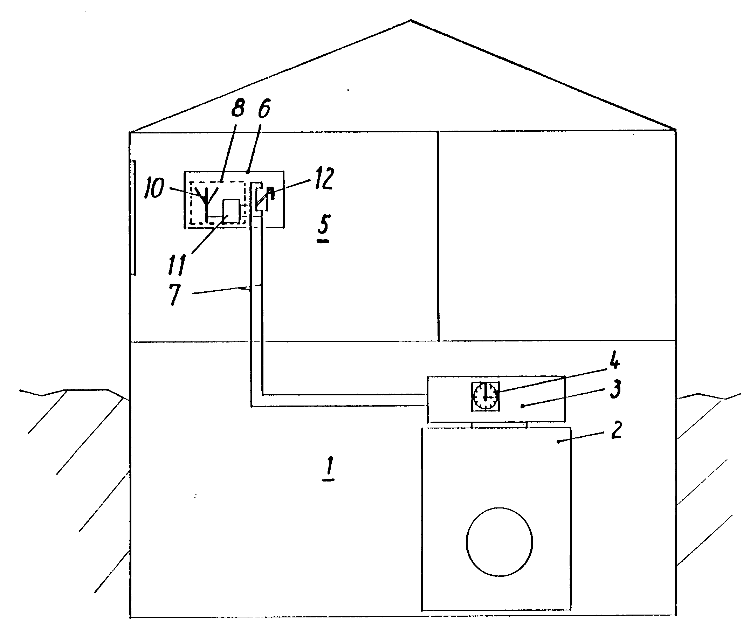

Die beigefügte Zeichnung stellt in einer einzigen Figur einen schematischen Querschnitt durch ein Wohnhaus zur Erläuterung der Erfindung dar.

Im Kellerbereich 1, d.h. im Erdreich und damit an einer empfangsungünstigen Stelle, sitzt der Heizkessel 2 mit einem zugeordneten Regler 3. Die einzelnen Funktionsabläufe werden durch eine Schaltuhr 4 gesteuert. In bekannter Weise sitzt im Wohnbereich 5 ein Fernbedienungsgerät 6, von dem aus die Befehle durch eine Zweidrahtleitung als installierter Zuleitung 7 an den Regler 3 geleitet werden. Außer den üblichen Funktionselementen ist im Fernbedienungsgerät 6 der Empfänger 8 für die Signale eines Senders 9 angeordnet. Dieser besteht aus einer Antenne 10 zum Empfangen und einer Elektronik 11 zum Auswerten und Umsetzen der Signale. Ferner ist ein in Abhängigkeit von der Raumtemperatur veränderlicher Widerstand 12 vorhanden.

## Patentansprüche

1. Einrichtung zum Empfangen mittels Funk übertragener, codierter Zeitsignale eines Senders (9) und zur Weiterleitung an die Schaltuhr (4) des Kesselreglers (3) einer Zentralheizungsanlage, bestehend aus einem an einer empfangsgünstigen Stelle eines Gebäudes angeordeten Empfänger (8) mit einer die Signale empfangenden Antenne (10) und einer Elektronik (11) zum Auswerten und Umsetzen der Sendeimpulse,
dadurch gekennzeichnet, daß der Empfänger (8) für die Signale in einem mit dem Kesselregler (3) verbundenen, im Wohnbereich (5) angeordneten Fernbedienungsgerät (6) angeordnet ist und daß der Weiterleitung an die Schaltuhr (4) die installierte Zuleitung (7) vom Fernbedienungsgerät (6) zum Kesselregler (3) dient.

## Claims

1. A receiving means for coded time signals transmitted by radio of a transmitter (9) and for for-warding said signals to the time switch (4) of the boiler controller (3) of a central heating device, comprising a receiver (8) installed at a position of the building with favourable receiving properties and an antenna (10) for receiving said signals and an electronic circuitry (11) for evaluating and transforming the radio pulses, characterised by that the receiver (8) for the signals is disposed in a remote controller unit (6) connected to the boiler controller (3) and located in the living area (5), and that the line (7) installed from the remote controller unit (6) to the boiler controller (3) serves for forwarding to the time switch (4).

## Revendications

1. Dispositif pour la réception de signaux de temps codés d'un émetteur (9), transmis par radio et pour la transmission au commutateur à temps (4) du régulateur (3) de la chaudière d'un chauffage central, comprenant un récepteur (8) installé en une position du bâtiment ayant une réception favorable avec une antenne (10) pour la réception des signaux et un bloc électronique (11) pour l'évaluation et la conversion des impulsions transmises,
caractérisé en ce que le récepteur (8) pour les signaux est disposé dans un dispositif de commande à distance (6) lié au régulateur (3) de la chaudière et disposé dans le domaine d'habitation (5), et que la ligne (7) installée entre le dispositif de commande à distance (6) et le régulateur (3) de la chaudière sert de transmission au commutateur à temps (4).
